# NEUE EUROPÄISCHE PATENTSCHRIFT

(11) **EP 3 658 796 B2**
(45) Veröffentlichungstag und Bekanntmachung des Hinweises auf die Entscheidung über den Einspruch: **27.11.2024**
(45) Hinweis auf die Patenterteilung: 23.06.2021
(21) Anmeldenummer: 18746879.8
(22) Anmeldetag: 24.07.2018
(51) Int. Cl.: F16D 65/092, F16D 65/097

(54) **REIBBELAGHALTEFEDER ZUR VERBESSERTEN BREMSKOLBENFIXIERUNG**
FRICTION LINING HOLDING SPRING FOR IMPROVED BRAKE PISTON FIXING
RESSORT DE MAINTIEN DE GARNITURE DE FRICTION POUR UNE FIXATION DE PISTON DE FREIN AMÉLIORÉE

(30) Priorität: 28.07.2017 DE 102017213057; 21.11.2017 DE 102017220789
(43) Veröffentlichungstag der Anmeldung: 03.06.2020
(73) Patentinhaber: Continental Automotive Technologies GmbH, 30175 Hannover (DE)
(72) Erfinder: WÜRZ, Matthias, 61440 Oberursel (DE); WEISE, Stefanie, 65760 Eschborn (DE); LEIDECKER, Norbert, 65760 Eschborn (DE); ADAM, Jens, 64285 Darmstadt (DE); KLACIK, Martin, 040 20 Kosice (SK)
(74) Vertreter: Westphal, Mussgnug & Partner Patentanwälte mbB
(86) Internationale Anmeldenummer: PCT/EP2018/070055
(87) Internationale Veröffentlichungsnummer: WO 2019/020636

(56) Entgegenhaltungen:
- EP-A1- 0 322 530
- EP-A1- 0 716 246
- EP-B1- 0 989 320
- WO-A1-2016/120800
- DE-A1- 102013 012 238
- DE-A1- 19 652 933
- DE-U- 7 129 399
- JP-A- 2007 285 385
- JP-A- H0 425 627
- JP-A- H08 303 499
- JP-U- S5 693 529
- JP-U- S5 929 432
- US-A- 4 609 077
- Maschinenübersetzung von JP H0425627 A
- Maschinenübersetzung von JP S5693529 U
- 1 January 2007, SPRINGER, ISBN: 978-3-540-49868-1, article MEISSNER MANFRED: "Metallfedern, Grundlagen, Werkstoffe, Berechnung, Gestaltung und Rechnereinsatz", pages: 1 - 166
- 1 October 2005, VIEWEG & SOHN VERLAG, ISBN: 978-3-8348-0078-7, article BÜRGEL RALF: "Festigkeitslehre und Werkstoffmechanik. Band 2", pages: 1 - 109
- Onlineshop Beuth-Verlag: DIN EN ISO 1302: 2002-06 (abgerufen am 08.02.2022)
- Onlineshop Beuth-Verlag- DIN EN ISO 1302 Berichtigung 1- 2008-08 (abgerufen am 08.02.2022)
- Onlineshop Beuth-Verlag: DIN EN ISO 1302:1993-12 (abgerufen am 08.02.2022)

## Beschreibung

Die Erfindung betrifft eine neuartige Reibbelaghaltefeder für einen Kraftfahrzeugscheibenbremsbelag sowie einen neuartigen Kraftfahrzeugscheibenbremsbelag mit Reibbelaghaltefeder.

Es ist grundsätzlich bekannt, einen Kraftfahrzeugscheibenbremsbelag mit Hilfe elastischer Vorspannung eines sogenannten Federclips anhand einer axial gerichteten Einsteckmontage in eine Innenwandung von einem topfförmigen Betätigungsorgan (wie insbesondere hydraulischer Bremskolben) lösbar einzuklemmen/zu fixieren. Zu diesem Zweck ist an einer Rückenplatte vom Kraftfahrzeugscheibenbremsbelag eine (Reibbelag-)Haltefeder vorgesehen, welche mit einem U-Basisabschnitt mittelbar oder unmittelbar auf der Rückseite der Rückenplatte aufsitzt und unlösbar daran fixiert ist, vgl. WO 92/18785 A1, WO 94/29611 A1, DE 101 36 235 A1. Zwecks lösbarer Fixierung am Betätigungsorgan verfügt die Haltefeder über zwei, diametral einander gegenüberliegend arrangierte, elastisch deformierbare, U-Federbügel die nach ordnungsgemäßer Einschub-Montage im Bremskolben mit definierter, nach radial auswärts gerichteter, elastischer Vorspannkraft, in die Innenwandung des topfförmigen Betätigungsorgans/Bremskolben eingeklemmt sind.

Die gattungsgemäßen Reibbelaghaltefedern verfügen an Ihrem U-Federbügel über ein abgekröpftes Kniestück. Ein Nachteil der bekannten Arrangements wird darin gesehen, dass die Einschubmontage der Reibbelaghaltefeder unter ergonomischen Gesichtspunkten verbesserungswürdig angesehen wird. Es ist nachteilig, dass der Kraftbedarf mit fortschreitender Einschubmontage in das Bremskolbeninnere progressiv anwächst. Die angestrebte Verbesserung soll unabhängig von manueller oder robotergestützter Montage sowohl im Fahrzeugbremsenherstellwerk wie auch zur Wartung im Fahrzeugfeld bei reduziertem Aufwand zur Verfügung stehen.

Es ist daher eine Aufgabe der vorliegenden Erfindung, eine leicht anwendbare Reibbelaghaltefeder, respektive einen verbessert montierbaren Kraftfahrzeugscheibenbremsbelag mit Reibbelaghaltefeder zur Verwendung in einer Kraftfahrzeugteilbelagscheibenbremse vorzulegen.

In Problemlösung wird erfindungsgemäß vorgeschlagen, dass jedes Kniestück über ein integriertes Getriebemittel verfügt, welches insbesondere als uneben ausgeprägte Bremskolbeneinführbahnkurve derart ausgebildet ist, so dass beim Einführen in den Bremskolben ein definiert vorgegebener Getriebeuntersetzungseffekt zwecks automatischer Beeinflussung bzw. Modellierung des notwendigen Kraftbedarfs vorliegt. Demzufolge wird mit fortschreitender Einschubmontage (Vorschub) der erfindungsgemäßen Reibbelaghaltefeder anhand der Einführbahnkurve eine automatisch angepasste Kraftuntersetzung mit einem Getriebeeffekt nach dem physikalischen Prinzip der Arbeitskraftzerlegung oder Arbeitswegverlängerung derart angeboten, dass der Arbeitskraftbedarf mit der fortschreitenden Einschubmontage zumindest nicht progressiv anwächst. Die beiden genannten physikalischen Maßnahmen (Arbeitskraftzerlegung, Arbeitswegstreckenlängung) können gemeinsam (nebeneinander) an dem Kniestück verkörpert sein. Insbesondere kann die Bahnkurve anhand Wegverlängerung und/oder dadurch automatisch verändert zerlegter Kraftkomponentenanteile (Axialkraftanteil, Radialkraftanteil) einen entsprechend angepassten Getriebeeffekt erzeugen, mit der Folge, dass mit fortschreitendem Montagevorschub ein reduzierter, konstanter oder allenfalls linear anwachsender Einschubkraftbedarf zur elastischen Vorspannung der Bremskolbenhaltefeder ausreicht. Dementsprechend definiert der konkrete Einführbahnkurvenverlauf des Kniestücks den erreichbaren Getriebeeffekt bzw. den Grad der erzielten Krafterleichterung.

Eine grundsätzlich unabhängig oder zusätzlich zu Getriebeeffekten ausnutzbare Montageerleichterungsmaßnahme sieht vor dass die gesamte Haltefeder, deren U-Federschenkel, beziehungswiese zumindest das Kniestück, zumindest in Richtung zur Bremskolbeninnenwandung mit einer besonderen Oberflächenbehandlung versehen ist. Die Oberflächenbehandlung kann unter anderem eine besondere Beschichtung der Haltefeder beinhalten. Besonders bevorzugt ist es beispielsweise, reibungsreduzierende Bestandteile als Zusatz in eine Korrosionsschutzbeschichtung zu integrieren, welche auf die Metalloberfläche der Bremskolbenhaltefeder aufgebracht ist. Als Alternative ist es möglich, dass eine Gleitbeschichtung als Deckschicht zusätzlich auf eine Korrosionsschutzbeschichtung aufgebracht wird. Insbesondere unbeschichtete Metalloberflächen können vorteilhaft behandelt sein, indem zumindest deren beteiligte Kontaktfläche weitgehend porenfrei, also geglättet (geschliffen, poliert, gebürstet o. ä.) ausgeführt ist. Dabei ist es vorteilhaft, wenn eine Rillenrichtung nach DIN ISO EN 1302 (Schliffbild) weitestgehend parallel zur Montage-Einschubrichtung M der Reibbelaghaltefeder gerichtet ausgeführt ist. Durch die reibungsreduzierte Oberflächenbehandlung wird herrschende Kontakt- bzw. Gleitreibung in Kontaktzonen zwischen Bremskolbeninnenwand und Kniestück herabgesetzt.

Die vorstehend definierte Erfindung wird schließlich anhand verschiedener Zeichnungen und Ausführungsformen, teilweise im Vergleich zu einer bekannten Haltefederkonstruktion erläutert. In der Zeichnung zeigt:
Fig. 1 schematisch Ansicht sowie Montagekraftentwicklung einer konventionellen, bekannten Reibbelaghaltefeder im Einführvorgang in einen Bremskolben,
Fig. 2 schematisch Ansicht sowie Montagekraftentwicklung einer bevorzugten Ausführungsform einer erfindungsgemäßen Reibbelaghaltefeder,

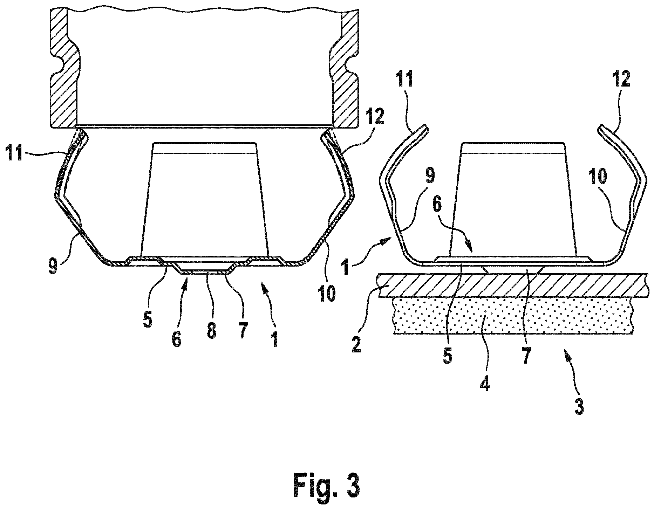

Fig. 3 die Ausführungsform nach Fig. 2 vergrößert,

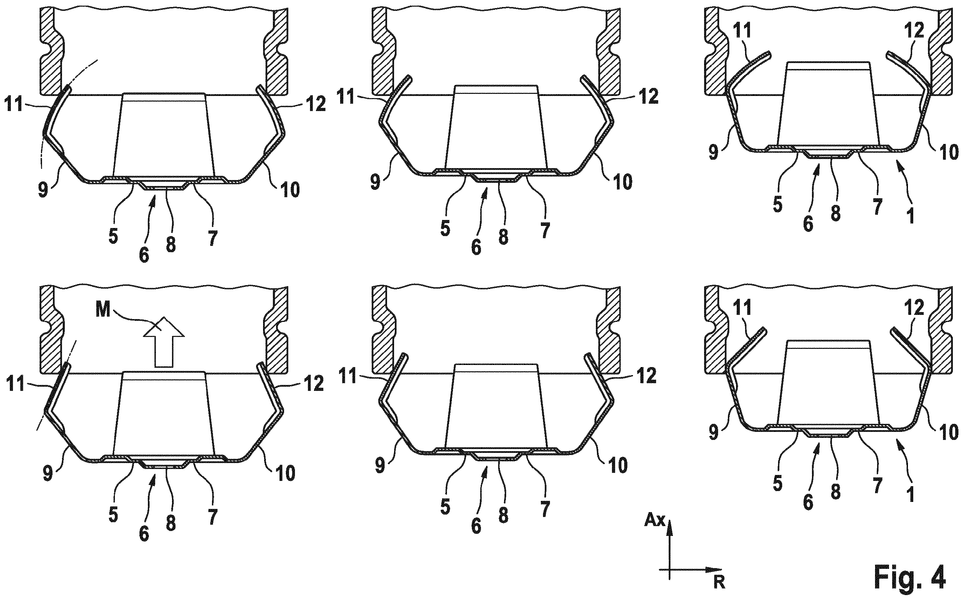

Fig. 4 schematischer Vergleich einer Montagestadienfolge a) erfindungsgemäß (obere Bildreihe) b) konventionell (untere Bildreihe), und

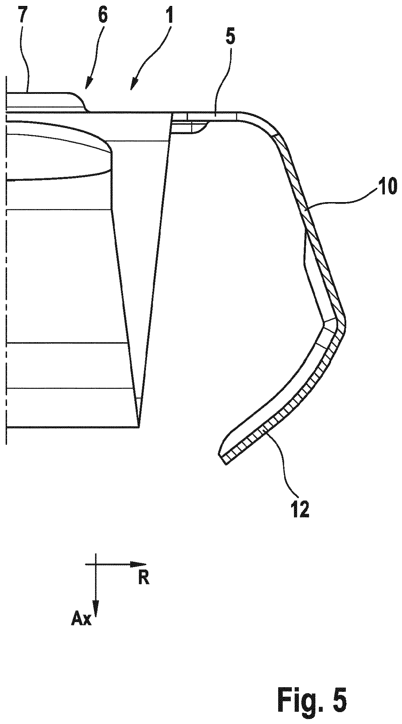

Fig. 5 vergrößerte Teilansicht einer Reibbelaghaltefeder ähnlich Fig. 3.

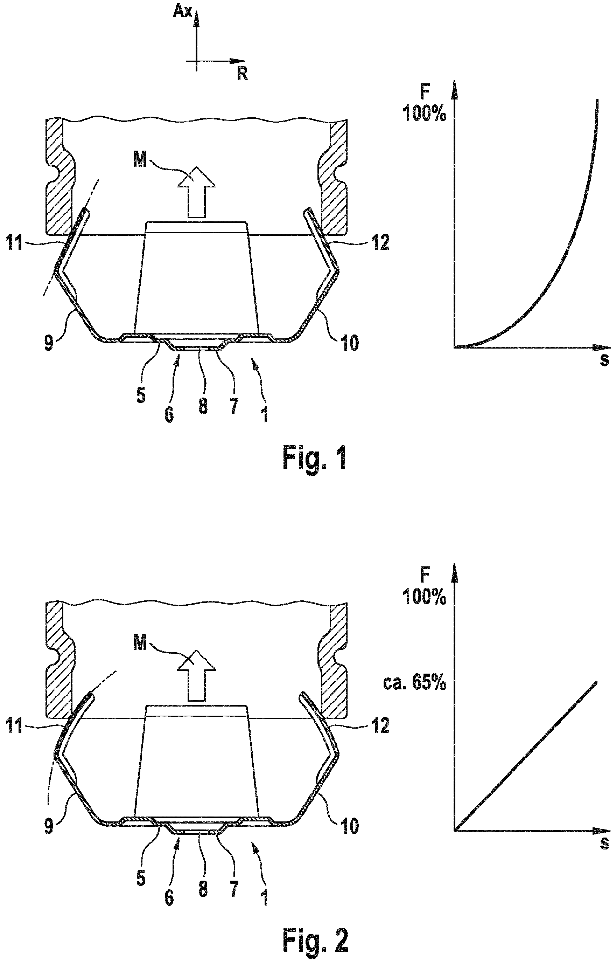

Eine Reibbelaghaltefeder 1 ist an einer Rückseite einer Rückenplatte 2 eines Reibbelags 3 einer Kraftfahrzeugteilbelagscheibenbremse fixiert. Die Vorderseite der Rückenplatte 2 trägt einen Reibwerkstoff 4. Die Reibbelaghaltefeder 1 ist aus dünnem Stahlblechwerkstoff einstückig ausgetrennt. Sie umfasst einen weitgehend eben sowie biegesteif arrangierten Basisabschnitt 5 mit einer zentralen Befestigungslasche 6 umfassend Napf und Durchgangsöffnung 8 zwecks Fixierung an der Rückenplatte 2. Lateral endseits des Basisabschnitts 5 liegen jeweils zwei symmetrisch zueinander arrangierte, U-Joch förmig gebogene, trapezförmig angestellte, U-Federschenkel 9,10 vor. Beide U-Federschenkel 9,10 sind in stumpfem Winkel zum Basisabschnitt 5 abgewinkelt abgezweigt, wobei jeder U-Federschenkel 9,10 mit einem nochmals gleichsinnig abgekröpften Kniestück 11,12 endet. Bekannte Kniestücke 11,12 sind jenseits Ihrer Abkröpfstelle gradlinig eben (Fig. 1).

Es wird ein insich gekrümmtes, beziehungswiese mehrfach abgekröpftes, Kniestück 11,12 vorgeschlagen, dessen Federbügel 9,10 somit eine Kraftuntersetzung integriert. Insbesondere kann eine progressiv gestaltete Hebelgetriebewirkung inkorporiert sein, so dass der Kraftbedarf zur Einschubmontage linear ist. Mit anderen Worten beinhaltet die Reibbelaghaltefeder 1 (oder alternativ das Betätigungsorgan, beziehungswiese beide Bauteile) eine gekrümmte Einführkontur, welche im Ergebnis einen progressiven Hebelgetriebeeffekt generiert. Ein besonderer Vorteil einer Ausführungsform der vorliegenden Erfindung besteht darin, dass eine besonders gekrümmte Einführkontur durch ein nichtlinear gestaltetes Hebelgetriebeübersetzungsverhältnis einen exponentiell ansteigenden Montagekraftbedarf vermeidet.

Mit anderen Worten ermöglicht die vorliegende Erfindung einen besonders günstig optimierten Eingriff zwischen Betätigungsorgan und Haltefeder. Insbesondere ist die Einführkontur des Kniestücks 11,12 degressiv gekrümmt.

Die Krümmung der Einführkontur des Kniestücks 11,12 kann in Abhängigkeit von der benötigen Getriebewirkung als Kreisbogen oder sonstwie gekrümmt gestaltet sein.

Ellipsen- oder Evolventenkrümmung ist in Abhängigkeit des gewünschten Übersetzungseffekts grundsätzlich möglich. Ein Kontaktwinkel zwischen Federarm und Betätigungsorgan wird positiv über dessen Montageweg verändert.

Der Kraftbedarf zur axial gerichteten Einschubmontage der Reibbelaghaltefeder 1 in den Innenraum des Betätigungsorgans ändert sich über den Montageweg kontinuierlich. Beim Erreichen der Endmontageposition ist der Kraftbedarf signifikant reduziert und erreicht beispielsweise etwa eine Reduktion um ca. 35% des Kraftbedarfs einer vorbekannten Gestaltung (vgl. Vergleich laut Fig. 1).

Es ist erfindungsgemäß prinzipiell ebenfalls ermöglicht, dass die Geometrie der Einführkontur des Kniestücks 11,12 mehrfach abgekröpfte, also prinzipiell gerade gestaltete Teilabschnitte und/oder mehrstufig gekröpft abgebogene Winkel enthält, und/oder eine Kombination von Krümmungen mit unterschiedlichen Radien alleine und/oder in Kombination mit einem oder mehreren gekrümmten und abgekröpften Teilabschnitt (en) . Durch die Geometrie ist der Untersetzungseffekt im Eingriff zwischen Betätigungsorgan und Einführkontur definiert.

In Modellierung des Biegewiderstandsmoments des U-Federschenkels bzw. Kniestücks 9,10,11,12 kann dieser insbesondere abschnittsweise verändert sein, indem eine Querschnittsprofilierung, Profilabänderung, Wandstärkenveränderung, Verdickung bzw. Durchgangsöffnung vorgesehen ist. Sämtliche Maßnahmen können einzeln oder in beliebiger Kombination miteinander verknüpft vorliegen, selbst wenn eine solche Bauform nicht durch die Zeichnung dargestellt sein sollte.

Eine zusätzlich nutzbare Variation besteht darin, dass der Werkstoff des U-Federschenkels 9,10 bzw. Kniestücks 11,12 abschnittsweise modifiziert vorliegen kann, indem beispielsweise eine abschnittsweise Kaltverfestigung eingebracht ist.

Eine grundsätzlich unabhängig oder zusätzlich zu Getriebeeffekten ausnutzbare Montageerleichterungsmaßnahme, mit unmittelbarer Wirkung, sieht vor dass eine korrosionsgeschützt beschichtete Haltefeder 1, deren U-Federschenkel 9,10 beziehungswiese zumindest dessen Kniestück 11,12, zumindest außenseitig - also in Richtung zur Bremskolbeninnenwandung - mit einer besonderen Oberflächenbehandlung versehen ist. Dies kann besonders glatt gepaarte Oberflächen oder eine Oberflächenbeschichtung mit tribologisch gleitreduzierenden Inhaltsstoffen einschließen. Demzufolge reduziert eine integrierte oder gesondert aufgebrachte Gleitbeschichtung die herrschende Kontakt- bzw. Gleitreibung zwischen Bremskolbeninnenwand und Kniestück 11,12. Glättung also Bürstrichtung, Politur- bzw. Schliffrichtung sind mit Rillenrichtung parallel zur Montagerichtung M der Belaghaltefeder 1 geführt ausgerichtet.

Kurz gesagt beinhaltet eine erfindungsgemäße konstruktive Gestaltung von Haltefeder 1 bzw. Betätigungsorgan einen verbesserten getrieblichen Eingriff mit verbessertem Eingriffswinkel wobei sich der neuartig verbesserte Getriebeeffekt sehr günstig auf eine Reduktion vom Einschubkraftbedarf zur vereinfachten Reibbelagmontage auswirkt. Demzufolge beinhaltet die vorliegende Erfindung eine deutliche Entlastung eines Werkers.

### Bezugszeichenliste

- 1: Reibbelaghaltefeder
- 2: Rückenplatte
- 3: Reibbelag
- 4: Reibwerkstoff
- 5: Basisabschnitt
- 6: Befestigungslasche
- 7: Napf
- 8: Durchgangsöffnung
- 9: Federschenkel
- 10: Federschenkel
- 11: Kniestück
- 12: Kniestück

- M: Montagerichtung
- Ax: Axialrichtung
- R: Radialrichtung

## Patentansprüche

1. Reibbelaghaltefeder (1) für einen Kraftfahrzeugteilbelagscheibenbremsbelag (3), welche aus dünnem Stahlblechwerkstoff einstückig ausgetrennt, als U-Joch gebogen vorliegt, umfassend einen weitgehend eben sowie biegesteif arrangierten U-Basisabschnitt (5), aufweisend eine zentrale Befestigungslasche (6) mit Napf (7) und Durchgangsöffnung (8) zwecks Fixierung an einer Rückenplatte (2) eines Kraftfahrzeugscheibenbremsbelags (3), und mit zwei symmetrisch zueinander arrangierte, jeweils endseits des U-Basisabschnitts (5) trapezförmig in stumpfem Winkel zum Basisabschnitt (5) abgewinkelt abgezweigte U-Federschenkel (9,10), mit Einschubmontage in einen Innenraum eines Betätigungsorgans mit einer Bremskolbeninnenwand, wobei jeder U-Federschenkel (9,10) ein freies Ende aufweist, das als abgekröpftes Kniestück (11,12) ausgebildet ist, wobei jedes Kniestück (11,12) über ein Getriebemittel verfügt, welches als uneben ausgeprägte Bremskolbeneinführbahnkurve derart ausgebildet ist, dass beim Einführen in den Bremskolben ein definiert vorgegebener Getriebeuntersetzungseffekt zwecks automatischer Beeinflussung bzw. Modellierung des notwendigen Kraftbedarfs vorliegt.

2. Reibbelaghaltefeder (1) nach Anspruch 1, **dadurch gekennzeichnet, dass** das Kniestück (11,12) zur Ausbildung der Bremskolbeneinführbahnkurve insich mehrfach abgekröpft abgewinkelt ist.

3. Reibbelaghaltefeder (1) nach Anspruch 1 oder 2, **dadurch gekennzeichnet, dass** das Kniestück (11,12) zur Ausbildung der Bremskolbeneinführbahnkurve über wenigstens einen Bogenabschnitt verfügt.

4. Reibbelaghaltefeder (1) nach Anspruch 3, **dadurch gekennzeichnet, dass** der Bogenabschnitt einen Teil eines Kreisbogens oder einen Teil einer mathematischen Funktion, insbesondere von einer höheren Gattung, wie beispielsweise Evolvente, Elipse, e-Funktion oder ähnlich, beinhaltet.

5. Reibbelaghaltefeder (1) nach einem oder mehreren der Ansprüche 1-4, **dadurch gekennzeichnet, dass** eine segmentierte Bremskolbeneinführbahnkurve vorliegt, welche aus mehreren Abschnitten gleicher Ordnung, oder aus mehreren Abschnitten unterschiedlicher Ordnung, aufgebaut ist.

6. Reibbelaghaltefeder (1) nach einem oder mehreren der vorhergehenden Ansprüche 1-5, **dadurch gekennzeichnet, dass** die Bremskolbeneinführbahnkurve einen progressiven Getriebeeffekt induziert.

7. Reibbelaghaltefeder (1) nach einem oder mehreren der vorhergehenden Ansprüche 1-6, **dadurch gekennzeichnet, dass** jeder U-Federschenkel (9,10) beziehungsweise Kniestück (11,12), zur Modellierung seines Biegewiderstandsmoments, über eine abgeänderte Gestalt verfügt.

8. Reibbelaghaltefeder (1) nach einem oder mehreren der vorhergehenden Ansprüche 1-7, **dadurch gekennzeichnet, dass** jeder U-Federschenkel (9,10) beziehungsweise Kniestück (11,12), zur Modellierung seines Biegewiderstandsmoments, über eine Werkstoffmodifikation verfügt.

9. Reibbelaghaltefeder (1) nach einem oder mehreren der vorhergehenden Ansprüche 1-8, **dadurch gekennzeichnet, dass** zumindest ein Kniestück (11,12) eines U-Federschenkels (9,10) mit einer Oberflächenbehandlung versehen ist.

10. Reibbelaghaltefeder (1) nach einem oder mehreren der vorhergehenden Ansprüche 1-9, **dadurch gekennzeichnet, dass** eine Oberflächenbehandlung eine besondere Beschichtung der Reibbelaghaltefeder (1) beinhalten.

11. Reibbelaghaltefeder (1) nach Anspruch 10, **dadurch gekennzeichnet, dass** eine Korrosionsschutzbeschichtung der Reibbelaghaltefeder (1) reibungsreduzierende Bestandteile integriert, oder dass eine Korrisionsschutzbeschichtung mit einer Gleitbeschichtung als gesonderte Decklage versehen ist.

12. Reibbelaghaltefeder (1) nach einem oder mehreren der vorhergehenden Ansprüche 1-11, **dadurch gekennzeichnet, dass** die Reibbelaghaltefeder (1) in einer Kontaktzone des Kniestücks (11,12) im Wesentlichen geglättet, wie insbesondere gebürstet, geschliffen oder poliert, ausgeführt ist sowie mit zueinander parallel geführter Rillenausrichtung gemäß DIN ISO EN 1302 sowie mit bevorzugt parallel zur Montage-Einschubrichtung M der Reibbelaghaltefeder (1) ausgerichteter Rillenrichtung.

13. Kraftfahrzeugteilbelagscheibenbremsbelag (3) mit einer Reibbelaghaltefeder (1) nach einem oder mehreren der Ansprüche 1 - 12.

## Claims

1. Friction lining holding spring (1) for a motor vehicle partially lined disc brake brake lining (3), which friction lining holding spring (1) is present in a manner which is severed in one piece from a thin steel sheet material and is bent as a U-shaped yoke, comprising a U-base section (5) which is arranged largely in a planar and flexurally rigid manner, having a central fastening clip (6) with a bowl (7) and a through opening (8) for the purpose of fixing on a rear plate (2) of a motor vehicle disc brake lining (3), and with two U-spring legs (9, 10) which are arranged symmetrically with respect to one another and branch off in each case on the end side of the U-base section (5) trapezoidally in a manner which is angled away from the base section (5) at an obtuse angle, for push-in mounting into an interior space of an actuating member with a brake piston inner wall, each U-spring leg (9, 10) having a free end which is configured as an angled-off elbow (11, 12), each elbow (11, 12) having a gear means which is configured as a brake piston insertion trajectory of uneven configuration, such that, in the case of insertion into the brake piston, there is a step-down gear effect which is predetermined in a defined manner for the purpose of automatic influencing or modelling of the necessary power requirement.

2. Friction lining holding spring (1) according to Claim 1, **characterized in that** the elbow (11, 12) is angled away in a manner which is angled off inherently multiple times in order to configure the brake piston insertion trajectory.

3. Friction lining holding spring (1) according to Claim 1 or 2, **characterized in that** the elbow (11, 12) has at least one arcuate section in order to configure the brake piston insertion trajectory.

4. Friction lining holding spring (1) according to Claim 3, **characterized in that** the arcuate section comprises a part of a circular arc or a part of a mathematical function, in particular of a higher type, such as, for example, an involute, an ellipse, an E-function or the like.

5. Friction lining holding spring (1) according to one or more of Claims 1 to 4, **characterized in that** there is a segmented brake piston insertion trajectory which is assembled from a plurality of sections of the same order, or from a plurality of sections of different order.

6. Friction lining holding spring (1) according to one or more of the preceding Claims 1 to 5, **characterized in that** the brake piston insertion trajectory induces a progressive gear effect.

7. Friction lining holding spring (1) according to one or more of the preceding Claims 1 to 6, **characterized in that** each U-spring leg (9, 10) or elbow (11, 12) has a modified design, in order to model its bending resistance moment.

8. Friction lining holding spring (1) according to one or more of the preceding Claims 1 to 7, **characterized in that** each U-spring leg (9, 10) or elbow (11, 12) has a material modification, in order to model its bending resistance moment.

9. Friction lining holding spring (1) according to one or more of the preceding Claims 1 to 8, **characterized in that** at least one elbow (11, 12) of a U-spring leg (9, 10) is provided with a surface treatment.

10. Friction lining holding spring (1) according to one or more of the preceding Claims 1 to 9, **characterized in that** a surface treatment comprises a special coating of the friction lining holding spring (1).

11. Friction lining holding spring (1) according to Claim 10, **characterized in that** a corrosion protection coating of the friction lining holding spring (1) integrates friction-reducing constituent parts, or **in that** a corrosion protection coating is provided with a sliding coating as a separate top layer.

12. Friction lining holding spring (1) according to one or more of the preceding Claims 1-11, **characterized in that** the friction lining holding spring (1) is of substantially smoothed configuration, such as, in particular, brushed, ground or polished, in a contact zone of the elbow (11, 12), and with a groove orientation which is guided in parallel with one another in accordance with DIN ISO EN 1302 and with a groove direction which is preferably oriented parallel to the mounting push-in direction M of the friction lining holding spring (1).

13. Motor vehicle partially lined disc brake brake lining (3) with a friction lining holding spring (1) according to one or more of Claims 1 to 12.

## Revendications

1. Ressort de maintien de garniture de friction (1) pour une garniture de frein à disque à garniture partielle (3) de véhicule automobile, qui se présente sous forme cintrée en forme d'étrier en U et sous forme découpée d'une seule pièce à partir d'un matériau en tôle d'acier mince, comprenant une portion de base de U (5) agencée de manière essentiellement plane et rigide en flexion, présentant une patte de fixation centrale (6) avec une coupelle (7) et une ouverture de passage (8) pour la fixation à une plaque arrière (2) d'une garniture de frein à disque (3) de véhicule automobile, et comprenant deux branches de ressort en U coudées (9, 10), agencées symétriquement l'une par rapport à l'autre, coudées à chaque fois du côté de l'extrémité de la portion de base de U (5) en forme de trapèze suivant un angle obtus par rapport à la portion de base (5), avec un montage par enfoncement dans un espace interne d'un organe d'actionnement ayant une paroi interne de piston de frein, chaque branche de ressort en U (9, 10) présentant une extrémité libre réalisée sous forme de pièce coudée (11, 12), chaque pièce coudée (11, 12) disposant d'un moyen de transmission qui est réalisé sous forme de courbe de trajectoire d'insertion de piston de frein marquée de manière inégale de telle sorte que lors de l'introduction dans le piston de frein, il se produise un effet de démultiplication de transmission prédéfini de manière définie dans le but d'influencer ou de modéliser automatiquement la force requise.

2. Ressort de maintien de garniture de friction (1) selon la revendication 1, **caractérisé en ce que** la pièce coudée (11, 12) est coudée plusieurs fois en soi pour réaliser la trajectoire d'insertion de piston de frein.

3. Ressort de maintien de garniture de friction (1) selon la revendication 1 ou 2, **caractérisé en ce que** la pièce coudée (11, 12), pour réaliser la trajectoire d'insertion de piston de frein, dispose d'au moins une portion en arc.

4. Ressort de maintien de garniture de friction (1) selon la revendication 3, **caractérisé en ce que** la portion en arc comprend une partie d'un arc de cercle ou une partie d'une fonction mathématique, en particulier de degré supérieur, comme par exemple une développante, une ellipse, une fonction e ou similaire.

5. Ressort de maintien de garniture de friction (1) selon l'une quelconque ou plusieurs des revendications 1 à 4, **caractérisé en ce qu'** il est prévu une trajectoire d'insertion de piston de frein segmentée qui est constituée de plusieurs portions de même ordre ou de plusieurs portions d'ordres différents.

6. Ressort de maintien de garniture de friction (1) selon l'une quelconque ou plusieurs des revendications précédentes 1 à 5, **caractérisé en ce que** la trajectoire d'insertion de piston de frein induit un effet de transmission progressif.

7. Ressort de maintien de garniture de friction (1) selon l'une quelconque ou plusieurs des revendications précédentes 1 à 6, **caractérisé en ce que** chaque branche de ressort en U (9, 10) ou chaque pièce coudée (11, 12) dispose d'une forme modifiée pour la modélisation de son couple de résistance de flexion.

8. Ressort de maintien de garniture de friction (1) selon l'une quelconque ou plusieurs des revendications précédentes 1 à 7, **caractérisé en ce que** chaque branche de ressort en U (9, 10) ou chaque pièce coudée (11, 12) dispose d'une modification de matériau pour la modélisation de son couple de résistance de flexion.

9. Ressort de maintien de garniture de friction (1) selon l'une quelconque ou plusieurs des revendications précédentes 1 à 8, **caractérisé en ce qu'** au moins une pièce coudée (11, 12) d'une branche de ressort en U (9, 10) est pourvue d'un traitement de surface.

10. Ressort de maintien de garniture de friction (1) selon l'une quelconque ou plusieurs des revendications précédentes 1 à 9, **caractérisé en ce qu** 'un traitement de surface présente un revêtement particulier du ressort de maintien de garniture de friction (1).

11. Ressort de maintien de garniture de friction (1) selon la revendication 10, **caractérisé en ce qu** 'un revêtement de protection anticorrosion du ressort de maintien de garniture de friction (1) intègre des constituants réduisant les frottements, ou **en ce qu'**un revêtement de protection contre la corrosion est pourvu d'un revêtement de glissement en tant que couche de finition séparée.

12. Ressort de maintien de garniture de friction (1) selon l'une quelconque ou plusieurs des revendications précédentes 1 à 11, **caractérisé en ce que** le ressort de maintien de garniture de friction (1) est réalisé dans une zone de contact de la pièce coudée (11, 12) sous forme essentiellement lissée, par exemple brossée, meulée ou polie, ainsi qu'avec une orientation de rainures guidées parallèlement les unes aux autres selon DIN ISO EN 1302 ainsi qu'avec une direction de rainure de préférence orientée parallèlement à la direction d'enfoncement de montage M du ressort de maintien de garniture de friction (1).

13. Garniture de frein à disque à garniture partielle (3) de véhicule automobile comprenant un ressort de maintien de garniture de friction (1) selon l'une quelconque ou plusieurs des revendications 1 à 12.
